# EUROPEAN PATENT SPECIFICATION

(11) **EP 3 379 981 B1**
(45) Date of publication and mention of the grant of the patent: **31.03.2021**
(21) Application number: 16815905.1
(22) Date of filing: 24.11.2016
(51) Int. Cl.: B65D 85/804, A47J 31/06, A47J 31/36, A47J 31/42, A23N 12/08, A23F 5/04, A23F 5/26

(54) **COFFEE DISPENSING APPARATUS**
KAFFEEAUSGABEVORRICHTUNG
APPAREIL DE DISTRIBUTION DE CAFÉ

(30) Priority: 25.11.2015 GB 201520831; 24.03.2016 GB 201604993
(43) Date of publication of application: 03.10.2018
(73) Proprietor: CambDEV Limited, Cambridge, Cambridgeshire CB25 9QE (GB)
(72) Inventor: MALKIN, Hugh, Cambridge Cambridgeshire CB25 9QE (GB); BULLOCK, Timothy Charles, Poole Dorset BH13 7HT (GB); GUTSELL, Graham Scott, Newbury Berkshire RG14 1QL (GB); GEORGE, Ian Micheal Riorden, Salisbury Wiltshire SP1 3NN (GB); HASTINGS, Nicholas James, Cambridge Cambridgeshire CB24 4SW (GB)
(74) Representative: EIP
(86) International application number: PCT/GB2016/053696
(87) International publication number: WO 2017/089810

(56) References cited:
- WO-A1-96/23437
- WO-A1-2014/043652
- WO-A1-2014/102702
- WO-A1-2016/081307
- US-A1- 2011 274 802
- US-A1- 2012 121 768
- US-A1- 2012 121 779
- US-A1- 2012 171 332

## Description

### Field of the Invention

This invention relates to cartridges, apparatus and processes for producing and dispensing brewed coffee by grinding and extraction of coffee within a prepacked cartridge.

### Background to the Invention

Coffee making apparatus for brewing coffee powder contained in a cartridge, comprising a brewing chamber adapted to receive a coffee powder cartridge, means for perforating the coffee powder cartridge, and a pump for feeding hot brewing water into the brewing chamber to extract the coffee are now ubiquitous.

These devices are used predominantly in homes, being designed for use by untrained operators. They offer a relatively quick and convenient method for producing higher quality coffee brews than can be obtained using instant coffee granules, whilst avoiding the need for costly roasting, grinding and brewing paraphernalia, the use of which requires considerable expertise. Indeed, the system commercialized under the trademark "Nespresso®" has sold in the millions and is currently used in homes, restaurants and hotels throughout the world.

A variety of different cartridges (or capsules) for use with such apparatus have been described (see for example: US4895308; US5402707; WO93/17932; US5656316; WO2014/128658; WO2014/091439; US2005/0150391 and EP1554958). Such cartridges contain ground and roasted coffee powder which is automatically or semi-automatically extracted under pressure, providing convenience in operation as well as reproducible extraction conditions. They therefore permit any user to quickly and effortlessly prepare a cup of freshly extracted coffee.

For extracting the coffee powder contained in the cartridge, manually operated, semi-automatic as well as fully automatic devices have been described. Usually, in a manually operated coffee maker, the cartridge is inserted into a cartridge holder that in turn is inserted into the coffee making apparatus. In semi-automatic coffee makers, the cartridge is inserted into a cartridge retainer or directly into the brewing chamber of the machine, which is then closed manually (typically by means of a lever mechanism). In a fully automatic coffee maker, the cartridge is removed from a cartridge magazine and automatically inserted into the brewing chamber. In both automatic and semi-automatic apparatus, the used or spent cartridge is ejected from the brewing chamber and discarded into a waste container after brewing is complete without any operator intervention.

Common to all of the above-described coffee makers is the provision of one or more "brewing spikes" provided with one or more openings for injecting brewing water into the cartridge and also adapted to punch the bottom and/or the top of the cartridge. During operation, the brewing water is injected into the cartridge by means of the brewing spike, with the result that is flows under pressure through the coffee powder contained in the cartridge and escapes as brewed coffee from the cartridge through perforations created in the bottom.

However, the quality of the brewed coffee dispensed by the cartridge systems described above is limited by the fact that the coffee contained in the cartridges is in a pre-roasted, pre-ground and powdered form. This greatly compromises the organoleptic qualities of the resultant coffee extract, since many soluble and volatile aromatic components which contribute to the quality of brewed coffee are produced transiently during roasting and/or grinding and are rapidly lost during subsequent storage. Alternatively, coffee cartridges comprising unground roasted beans are known, as it is shown in document US 2012/121768 A1.

There is therefore a need for a convenient, cartridge-based coffee making system which provides superior coffee beverages by permitting the user to roast and grind the coffee prior to brewing.

### Summary of the Invention

According to the invention there is provided a coffee cartridge according to claim 1.

This, in an example that serves to better understand the invention, a coffee cartridge is provided containing unground and unroasted coffee beans, said cartridge having walls defining a chamber in which the beans are contained, the cartridge being adapted to serve as a roasting, grinding and extraction chamber for the coffee beans.

In such examples, the cartridge is preferably heat resistant to at least 200 °C, for example being heat resistant to at least 210°C, at least 220°C, at least 230 °C, at least 240°C, at least 250 °C or over 250°C. Furthermore, in such examples the chamber-proximal surface of at least one wall comprises milling means for grinding the coffee beans within the chamber.

Thus, in a further example it is provided a coffee cartridge containing unground and unroasted coffee beans, said cartridge having walls defining a chamber in which the beans are contained, the cartridge being adapted to serve as a roasting, grinding and extraction chamber for the coffee beans, wherein: (a) the cartridge is heat resistant to at least 200 °C; and (b) the chamber-proximal surface of at least one wall comprises milling means for grinding the coffee beans within the chamber. In such examples, part or all of said at least one wall comprising milling means is moveable relative to the other walls.

The invention contemplates coffee cartridges which permit grinding and roasting of the coffee beans contained in the cartridge, so enabling the dispensing of superior coffee beverages by permitting the user to roast and grind the coffee prior to brewing.

The unground coffee beans are preferably whole coffee beans. However, the grinding operation may be facilitated by the use of cracked coffee beans. In such embodiments, unground beans having an average particle size of at least 2 mm, for example at least 3mm, at least 4mm, at least 5mm or about 6mm may be used.

The cartridge comprises unroasted coffee beans. The roasting process may be facilitated by the use of dried or pre-heated coffee beans (or mixtures thereof).

The beans contained in the chamber consist, or consist essentially of, beans of a single type as defined above. However, it will be appreciated that the use of mixtures of bean types (such as a mixture of two or more of whole, cracked, dried, pre-heated and unroasted beans) may be used to balance the quality of the brew with the stringency of the demands for roasting and grinding, while producing highly desirable flavour profiles.

In another aspect, there is provided apparatus for grinding, brewing and dispensing coffee for use with the cartridge of the invention, the apparatus comprising: (a) a cartridge holder adapted to receive and secure the cartridge; (b) a ram for driving one of the walls, or a portion thereof, of the cartridge towards an opposite wall thereof; (c) opposed perforating means for perforating opposite walls of the cartridge to permit a flow of water through the chamber; (d) a source of pressurized hot water; (e) supply means for introducing the pressurized hot water into the chamber whereat coffee is thereby extracted to yield a coffee brew; (f) discharge means for delivering coffee brewed in the chamber to the dispenser; (g) a dispenser for delivering brewed coffee to a drinking vessel for consumption; and (h) a controller for controlling the operations of one or more of the ram, perforating means, source of pressurized hot water, supply means and/or discharge means.

In another aspect, there is provided a system for grinding, brewing and dispensing coffee comprising the cartridge of the invention secured in the cartridge holder of the apparatus of the invention.

According to the invention, there is provided a process for producing and dispensing brewed coffee according to claim 10.

According to this aspect, the process may further comprise the following automated steps: (a) grinding the beans confined within the cartridge to form coffee grounds; (b) perforating opposite walls of the cartridge; (c) introducing hot water under pressure into the cartridge *via* the perforations formed in step (b); (d) passing the hot water of step (c) through the coffee grounds, thereby extracting coffee to yield a coffee brew; (e) discharging the brew *via* the perforations in the cartridge formed in step (b) to the dispenser; and (f) delivering the brew to a drinking vessel *via* the dispenser for consumption.

Other aspects of the invention are as defined in the claims appended hereto.

### Detailed description

### Definitions and general preferences

The coffee beans used according to the invention are seeds of plants of the genus *Coffea.* The beans may be of any variety, but are preferably from the species *C. robusta* ("*robusta*" coffee beans) or *C. Arabica* ("*arabica*" coffee beans).

Preferably the coffee beans are derived from *C. arabica* (for example, being South American or East African arabicas).

The coffee beans used according to the invention may also comprise blends containing mixtures of coffee bean-derived material derived from both *C. robusta* and *C. arabica* (for example, South American, East African or blends thereof). In preferred embodiments, the coffee beans are blend of arabica and robusta which are predominantly arabica with minor quantities of robusta.

The term *coffee cartridge* (sometimes abbreviated herein to *cartridge,* where context permits) is a term of art defining a single-use container comprising a chamber containing coffee which is adapted to be inserted into an automatic or semi-automatic coffee dispensing apparatus whereat hot water is introduced into the chamber and the coffee extracted and dispensed, after which the cartridge is discarded. Coffee cartridges are sometimes referred to as "coffee capsules" in the art.

Coffee cartridges can both reduce the time needed to brew coffee and simplify the brewing process by eliminating the need to measure out portions from large bulk containers, while permitting the user to select from a wide range of different coffee types. They can also help to keep the unused product fresher by individually packaging portions separately without exposing the entire supply batch to air and light.

A *single-serve coffee cartridge* is a term of art for a coffee cartridge containing a single portion of coffee in the chamber, i.e. containing a quantity of coffee sufficient for a single beverage.

As used herein, the term *roasted* as applied to coffee beans (including the whole, cracked and/or ground coffee beans as herein defined) defines material that has been roasted to some degree. The term *roasting* is to be interpreted accordingly.

The term *fluidized bed roasting* in the context of coffee beans is a term of art defining a roasting process whereby coffee beans are at least partially levitated by a stream of heated air in which the degree of roasting is controlled by variation of the temperature of the air and the duration of heating.

Fluidized bed roasting may be applied according to the invention to unground coffee beans (as defined herein), and in particular to whole beans as well as beans which have been cracked or fragmented to a limited degree. Its use in relation to cracked beans may permit lower air velocities, smaller air ducts and/or reduced roasting temperatures and/or times.

Fluidized bed roasting may also be advantageously applied to dried and/or pre-heated coffee beans (as herein defined), since its use in relation to such materials may permit lower air velocities, smaller air ducts and/or reduced roasting temperatures and/or times.

The term *fast fluidized bed roasting* as used herein defined fluidized bed roasting (as defined above) in which the temperature of the heated air exceeds 250 °C (for example, about 300°C), so permitting roasting to proceed at an accelerated rate. Fast fluidized bed roasting may also be advantageously applied to dried and/or pre-heated coffee beans (as herein defined), since its use in relation to such materials may permit lower air velocities, smaller air ducts and/or reduced roasting temperatures and/or times.

The term *in situ roasting,* as used herein, defines a process in which roasting of the coffee material is carried out within the coffee cartridge chamber.

The term *remote roasting,* as used herein, defines a process in which roasting of the coffee material is carried out outside of the coffee cartridge chamber. Remote roasting therefore requires that the cartridge of the invention be adapted to serve as both a grinding and extraction chamber for the coffee beans, but also to permit transfer of the beans to a separate roasting chamber and to receive the roasted beans once roasting is completed.

The degree of roasting depends *inter alia* on factors such as temperature and duration of roasting, but may be characterized by the colour change of the coffee as a result of the roasting process.

This colour change can be measured using an Agtron® spectrophotometer and expressed as values on a scale as follows:

| **Roast** | **Agtron value** | **Characteristics** |
|---|---|---|
| Light | >70 | Light brown to cinnamon colour. Light body, muted aroma, tea-like flavour. No oil on surface of bean. |
| Medium-light | 61-70 | Moderately light brown colour. Bright, sweet acidity. Surface of bean remains dry |
| Medium | 51-60 | Medium brown color. Balanced acidity, fuller body. Generally dry bean surface |
| Medium-dark | 41-50 | Rich brown color. Droplets of oil appear on bean surface. Muted acidity, sometimes heavier body. |
| Dark | 35-40 | Deep brownish/black color. Spots of oil to shiny surface Bittersweet, scorched-wood roast notes. Acidity muted. |
| Very dark | 25 - 34 | Black surface covered brightly with oil. Bitter/bittersweet tones dominate. Body thin. |
| Extremely dark | < 25 | Black, shiny surface. Burned bitter tones. |

Thus, the terms *light, medium-light, medium, medium-dark, dark, very dark* and *extremely dark* are applied herein in relation to the roasted coffee bean material for use according to the invention in accordance with the above scale.

As explained above, whilst the degree of roasting depends in part on the duration of roasting, in general it will be appreciated that temperatures of 196 °C - 200°C yield a light roast, about 205°C a medium-light roast, about 210 °C a medium ("American") roast, about 219°C a medium-dark ("City") roast, about 225 °C a dark ("Full City") roast, 230 °C to 240 °C very dark ("Vienna" or "French") roasts and about 245°C an extremely dark ("Italian") roast.

Roasting therefore typically involves a process of heating coffee beans to a point beyond the *first crack.* The *first crack* is a term of art which describes a stage of roasting at which the beans first emit a cracking sound as the temperature nears 200°C (usually about 196 °C). Since the roasting of pre-ground or cracked beans may not be characterized by a "first crack", the term "roasting" as used herein may also define a process whereby cracked or ground coffee beans are heated to temperature of 196°C or higher, or subjected to heating such that an Agtron value of >70 is achieved.

As used herein, the term "unroasted coffee beans" defines coffee beans that are unroasted (as defined above), but which may have been subject to certain heat treatments to yield the dried or pre-heated beans defined below. The term therefore includes "green" coffee beans.

In this context, the term "green" is a term of art defining beans which are unroasted but which have been dried to reduce the water content below that of beans fresh from demucilaging (which have a moisture content of 45 to 55% by weight). Thus, the term includes green coffee beans which have been dried (e.g. by sun drying or artificial oven heating) to a water content of 10%-14% by weight, and usually about 12% by weight.

However, it should be noted that the term "unroasted coffee bean" encompasses not only green coffee beans (as described above), but also a class of beans which includes "dried" and "pre-heated" coffee beans.

In this regard, the term "dried coffee bean" defines an unroasted bean which, while being unroasted (as defined above), has been dried to a moisture content of less than 10% (for example within the range of 0.5% to 9.0% or 1.0 to 5.0% by weight). Such dried beans are relatively brittle and shrunken relative to green coffee beans, and are therefore easier to grind in the unroasted state. They may also exhibit favourable roasting and extraction properties.

Furthermore, it should be noted that the term "unroasted coffee bean" encompasses not only green and dried coffee beans (as explained above), but also "pre-heated" coffee beans.

In this regard, the term "pre-heated coffee bean" defines an unroasted bean which, while being unroasted (as defined above), has nevertheless been heated to a point beyond being merely *dried* (as defined above), but which has not yet been *lightly roasted* (as also defined above). This is typically achieved by heating to a point before the first crack. Pre-heating green or dried coffee beans before grinding greatly facilitates subsequent grinding operations and so may be useful in some embodiments of the invention.

As used herein, the term "part-roasted coffee bean" defines a bean which has been heated to a point beyond being merely dried or pre-heated (as defined above), such some (but not all) of the beans (or some but not all of any individual bean) has been at least lightly roasted. Thus, part-roasted coffee beans include beans which have been heated to a point at which some (but not all) have passed beyond the first crack. Such beans may be useful where particularly rapid roasting is required and/or the roasting temperatures employed are relatively low and/or of short duration. Part-roasted coffee beans also include beans which comprise a mixture (i.e. a blend) of unroasted and roasted coffee beans.

As used herein, the term "whole coffee bean" is used herein to define whole coffee beans which have not been cracked, broken up into fragments or ground. The terms unroasted, dried unroasted, roasted and pre-heated as defined above and used in relation to whole coffee beans are to be interpreted to mean that the various operations are performed on whole coffee beans as starting material, irrespective of the effects of such operations on the physical characteristics of the beans.

The term "cracked coffee bean" is used herein to define unground coffee beans which have been fragmented and/or cracked to some degree, but are not ground (i.e. have not been subject to course (or finer) grinding, as herein defined). Such beans have an average diameter of at least 2 mm, for example at least 3mm, at least 4mm, at least 5mm or about 6mm. Again, the terms unroasted, dried unroasted, roasted and pre-heated as defined above and used in relation to cracked coffee beans are to be interpreted to mean that the various operations are performed on cracked coffee beans as starting material, irrespective of the effects of such operations on the physical characteristics of the beans.

The term "ground coffee bean" is used herein to define coffee beans which are in a fragmented form, for example having an average particle diameter of about 1.5mm ("course ground"), about 1.0mm (regular ground), about 0.75mm (drip ground), about 0.4mm (fine ground) or about 0.2mm (espresso ground). Since coffee beans are typically ground after roasting, ground beans are typically also roasted to some degree.

Thus, as used herein, the term "unground coffee bean" defines a class of coffee bean which includes whole coffee beans (as define above) and cracked coffee beans (as defined above). Thus, references herein to unground coffee beans include whole beans as well as beans which have been cracked or fragmented to a limited degree (e.g. such that they have an average diameter of at least 2 mm, for example at least 3mm, at least 4mm, at least 5mm or about 6mm), but which have not been ground to an average particle diameter of less than about 1.5mm.

As used herein, the term "brewing spike" defines a component of the apparatus or cartridge of the invention which comprises means for perforating a wall of the cartridge thereby permitting the flow of water through said wall. In cases where the brewing spike forms part of the cartridge, it is preferably associated with retaining means providing a loose fit such that perforation may be achieved by a force exerted on the brewing spike by a component of the apparatus when in use as part of the system of the invention.

The brewing spike may also comprise channels for delivering water through the perforations in the wall and/or for conducting brewed coffee out of the chamber *via* the perforations.

The means for perforating a wall of the cartridge may take the form of one or more spikes, preferably a plurality of spikes. In cases where the brewing spike also comprise channels for delivering water through the perforations in the wall and/or for conducting brewed coffee out of the chamber, the perforating means may advantageously take the form of one or more hollow spike(s), needle injector(s) or cannula(e).

In cases where the brewing spike comprise channels for conducting brewed coffee out of the chamber *via* the perforations introduced into the chamber wall, the brewing spike may advantageously be integrated with a brew spout for dispensing the brewed coffee.

In cases where the brewing spike comprise channels for delivering hot water through the perforations in the wall and into the cartridge chamber, the brewing spike may advantageously be integrated with a plunger adapted to exert force on a wall of the chamber (or directly on the beans contained therein). In such embodiments, the plunger may incorporate a grinding head.

As used herein, the term "grinding head" defines a component of the cartridge or apparatus of the invention which comprises means for exerting (and/or transmitting, *via* contact with a cartridge chamber wall) a crushing and/or grinding force on the coffee beans within the cartridge chamber.

Thus, the grinding head may be a component of the apparatus, adapted to enter the cartridge (e.g. *via* an opening therein or after a wall is removed therefrom) and directly contact the beans.

Alternatively, or in addition, the grinding head may be a component of the cartridge, when it may be adapted to engage with a plunging means in the apparatus which drives it into contact with the beans in the cartridge chamber when in use as part of the system of the invention.

Thus, the present invention contemplates the use of a grinding head adapted to enter the cartridge and directly exert force on the beans in the cartridge, the grinding head being wholly an element of the apparatus and adapted to directly contact the coffee beans when in use as part of the system of the invention.

The means for exerting said crushing and/or grinding force may comprise milling means.

In this context, the milling means are substantially rigid features of the grinding head which contact a coffee bean and transmit a concentrated force thereto, facilitating its fragmentation.

The milling means preferably comprises the perforating means of the brewing spike.

In some embodiments, the grinding head comprises part or all of a wall of the coffee cartridge of the invention. In such embodiments, the grinding head may be adapted to releasably couple with a plunger of the apparatus of the invention.

In embodiments where the brewing spike is integrated with a plunger incorporating a grinding head, the means for exerting said crushing and/or grinding force may comprise the perforating means of the brewing spike.

Thus, in some embodiments, the apparatus of the invention comprises two different brewing spikes:
(a) a first brewing spike integrated with a plunger incorporating (or releasably coupled with) a grinding head; and
(b) a second brewing spike integrated with a brew spout for dispensing the brewed coffee comprising channels for conducting brewed coffee out of the chamber *via* perforations introduced into a chamber wall.

### Grinding

The coffee cartridge of the invention contains unground coffee beans and is adapted to serve as a grinding chamber for the coffee beans.

Since the coffee beans in the cartridge are unroasted coffee beans, grinding is typically executed after roasting.

As explained above, the ground coffee beans of the invention are in a fragmented form, for example having an average particle diameter of about 1.5mm ("course ground"), about 1.0mm ("regular ground"), about 0.75mm ("drip ground"), about 0.4mm ("fine ground") or about 0.2mm ("espresso ground").

It will therefore be appreciated that the ground coffee beans may be prepared by simple crushing - roast coffee beans are friable and the application of a crushing force with no rotational grinding may be sufficient to fragment the roasted beans into fragments sufficiently small as to constitute ground coffee beans as herein defined. In such cases, the grinding means may take the form of a moveable (preferably rigid) portion of the cartridge wall, such that a crushing force may be transmitted to the beans confined in the chamber.

However, grinding is typically more effective if a crushing force is coupled with rotational grinding. Here, the cartridge may be provided with a movable wall or part thereof which is rotatable relative to the chamber such that a rotational grinding force may be exerted on the beans confined in the chamber. Rotational grinding is particularly advantageous in circumstances where drip ground, fine ground or espresso ground coffee beans are required.

Crushing/grinding (as described above) may be executed with or without the use of milling means. Milling means are substantially rigid features (of the cartridge and/or apparatus) which contact a coffee bean and transmit a concentrated force thereto, facilitating its fragmentation. In preferred embodiments, the milling means may comprise one or more ribs, recesses, channels, teeth, ridges, spikes, blades or protrusions. The milling means may for part of the cartridge (e.g. taking the form of elements disposed on the chamber-proximal surface of at least one wall).

It will be appreciated that the nature of the milling means will depend on the physical condition of the unground coffee beans contained in the cartridge (and in particular, whether they are: (a) whole or cracked; and (b) unroasted, dried or pre-heated).

It will also be appreciated that whole coffee beans may require coarser, harder and/or sharper milling means than cracked beans, while roasted or dried beans are relatively friable and so may be effectively ground by the application of a crushing force without any such milling means being necessary. In contrast, green coffee beans (which have a relatively high water content and are difficult to grind while avoiding the formation of a paste) are typically (though not necessarily) pre-heated prior to grinding.

### Extraction

The coffee cartridge of the invention is adapted to serve as an extraction chamber for the coffee beans. The term "extraction" in this context defines a process whereby hot water is brought into contact with ground coffee beans thereby dissolving certain components of the coffee to form a coffee brew. This process is sometimes referred to in the art as brewing or percolation.

The temperature of the water, the pressure at which it is introduced into the chamber and the flow rate through the chamber all affect the quality of the coffee brew. However, those skilled in the art will be able to readily select appropriate values for these parameters by reference *inter alia* to the teachings of US4895308, US5402707, WO93/17932, US5656316, WO2014/128658, WO2014/091439, US2005/0150391 and EP1554958, all of which describe extraction of coffee contained in coffee cartridges.

The temperature of the hot water is typically between 91 and 94 °C (though this will depend on whether the extraction chamber is under vacuum, when lower temperatures may be effective).

The water pressure selected affects the flow rate of the water through the coffee grounds, but many other factors also contribute including *inter alia* the particle size distribution of the coffee grounds, their density, the strength of brew required and the desired extraction yield. Typically, the target extraction yield will be 18% to 22%. Such yields are obtainable at pressures of between 1 bar and 20 bar, yielding a mean flow rate of from 80 to 250 ml/min, for example from 120 to 200 ml/min.

The flow rate can be controlled, e.g. by varying the pressure of the hot water, to control the coffee intensity and avoid coffee under-extraction (associated with loss of flavour) or over-extraction (associated with bitterness).

The target total dissolved solids (TDS) in the dispensed brew will depend on the style of brew required, but will usually be between 1% (Americano style "long" coffees) and 20% ("short" coffees, such as espresso). This can be readily controlled by *inter alia* varying the total volume of hot water passed through the cartridge chamber and the dose of coffee in the chamber.

It will be appreciated that while the coffee cartridge chamber is sealed to an extent that is at least sufficient to confine the coffee beans and/or coffee grounds, the seal need not be sufficient to contain the hot water used for extraction (especially at the higher pressures described above). In such embodiments, the cartridge holder adapted to receive and secure the cartridge when in use provides such a seal, and ensures that the hot water pumped into the chamber passes through the grounds (and does not leak away from the chamber).

Thus, the cartridge holder is preferably adapted to serve as a pressure jacket to contain the pressurized hot water during injection into the chamber of the cartridge and through the coffee grounds

Various different means for achieving such a seal are described in the art, for example in US4895308, US5402707, WO93/17932, US5656316, WO2014/128658, WO2014/091439, US2005/0150391 and EP1554958.

### Roasting

The present invention contemplates the use of unroasted coffee beans.

The beans must be roasted prior to extraction.

As explained above, roasting may be achieved by heating the coffee to temperatures of at least 196°C - 200°C. Lower temperatures may be employed in circumstances where the beans are dried, pre-heated or part-roasted.

Preferably, the duration of roasting is below 5 minutes, and preferably below 3 minutes, more preferably below 2 minutes, and most preferably below 1 minute.

Any means of heating may be employed, including microwave heating, radiant heating, conductive heating, convection heating (e.g. by a flow of hot air) or any combination thereof.

The heating means (and heating parameters, including duration and temperature) will also be selected according to the bean to be roasted. For example, whole coffee beans may require exposure to higher temperatures and/or longer heating cycles, whereas cracked coffee beans may require lower temperatures and/or heating durations (since they typically offer a greater surface area to the heat source).

The roasting process may include a preliminary heating stage in which moisture is driven out of the beans. In embodiments where green coffee beans are employed, this moisture content can be as much as 12% by weight. The bean cannot actually be roasted until the moisture is removed: until it is removed, prolonged exposure to heat results in "cooking" rather than "roasting" of the bean. Cooking results in the formation of acids (such as acetic acid), and various off-flavours. Thus, in some embodiments, dried or pre-heated beans (as defined herein) are used.

The roasting process may also include a pre-grinding or crushing step, for example to increase the surface area of the beans exposed to heat (and so accelerate roasting).

Roasting may be conveniently achieved by oven roasting or fluidized bed roasting, as described in more detail below. In either case, the roasting may be preceded by an initial microwave heating step (e.g. to dry or pre-heat the beans and/or drive off moisture).

Roasting may be accompanied or followed by a degassing/venting step, since roasting is associated with the release of hot gases (mainly carbon dioxide) from the coffee material.

### Oven roasting

The beans may be roasted by radiant heat, for example in a drum heated in an oven. Such embodiments employ remote roasting configurations (described in more detail herein). However, care must be taken not to scorch and so ruin the beans, and smoke and oils generated in the process remain in contact with the beans and can confer a disagreeable taste.

### Fluidized bed roasting

In certain embodiments of the invention, the coffee is subjected to fluidized bed roasting (as herein defined). Fluidized bed roasting (for example as described in US5394623) avoids the problems associated with smoke and oils generated during oven roasting.

However, care must be taken to avoid scorching the beans. Thus, in embodiments where fluidized bed roasting is employed according to the invention, provision for quenching the beans after roasting is completed may be provided. This may be achieved by the introduction of a stream of ambient air or by spraying with water. Such techniques are described, for example, in US4484064, US5185171, US3964175 and US5394623.

Fluidized bed roasting may be readily implemented in remote roasting systems (as described above), since: (a) the stream of hot air may be used to drive the coffee material from the chamber of the cartridge and transport it to a separate roasting chamber (so obviating the need for a mechanical transfer ram, shuttle hopper or caddy); and (b) the use of a separate roasting chamber permits the use of larger airflow ducts (and hence higher volumetric flow rates) than could be achieved when using the cartridge itself as a roasting chamber.

However, fluidized bed roasting may also be implemented *in situ.* For example, in embodiments where part or all of at least one wall of the cartridge is reversibly openable or removable, sufficiently high volumetric flow rates into and out of the cartridge may be achieved to fluidize the beans *in situ* without the need for additional ducting in the cartridge.

Fluidized bed roasting may be applied according to the invention to unground coffee beans (as defined herein), and in particular to whole beans as well as beans which have been cracked or fragmented to a limited degree. Its use in relation to cracked beans may permit lower air velocities, smaller air ducts and/or reduced roasting temperatures and/or times.

Fluidized bed roasting may also be advantageously applied to dried and/or pre-heated coffee beans (as herein defined), since its use in relation to such materials may permit lower air velocities, smaller air ducts and/or reduced roasting temperatures and/or times.

Fast fluidized bed roasting (as used herein defined) may be advantageously used in circumstances where accelerated roasting is required. Fast fluidized bed roasting may be applied to dried and/or pre-heated coffee beans (as herein defined), since its use in relation to such materials may permit lower air velocities, smaller air ducts and/or reduced roasting temperatures and/or times.

Fluidized bed roasting may also be employed to remove chaff expelled from the bean as it expands during roasting, so reducing contamination from smoke and oils generated in the roasting process. This may conveniently be achieved by filtering the hot air to remove chaff produced during roasting.

### In situ roasting

As explained above, the present invention contemplates cartridges containing unroasted coffee beans.

The beans must be roasted prior to extraction.

According to some examples helpful to understand the invention, the roasting may be conveniently carried out within the cartridge chamber. In such examples, the cartridge is preferably formed of heat-resistant material, for example being able to withstand heating to at least 196°C (and preferably to temperatures approaching 250°C).

Suitable cartridge materials for systems using *in situ* roasting include paper, cardboard and coated paper or cardboard (for example metal-, polytetrafluoroethylene- (PTFE-) or nitrocellulose-coated paper or cardboard).

It will be appreciated that the use of dried or pre-heated beans may be advantageously used in circumstances where *in situ* roasting is employed, since their use may permit reduced roasting temperatures and/or times. Similarly, the use of cracked beans may also permit reduced roasting temperatures and/or times. A pre-grinding or crushing step (to increase the surface area of the beans exposed to heat) may also be advantageously employed where *in situ* roasting is used.

Thus, any limitations imposed by heat sensitivity of the cartridge may be at least partially mitigated by the selection of dried, pre-heated, cracked, pre-ground and/or crushed coffee beans.

Any means of heating may be employed for *in situ* roasting, including microwave heating, radiant heating, conductive heating, convection heating (e.g. by a flow of hot air) or any combination thereof. *In situ* roasting may also include a microwave heating step for rapid heating and/or drying of the beans (which may be followed by radiant, conductive or convective heating to complete the roasting process).

### Remote roasting

As an alternative to *in situ* roasting, the beans may be removed from the coffee cartridge, roasted in a separate roasting chamber, and then returned to the cartridge chamber for grinding and extraction.

Any suitable means for removing the beans from the cartridge may be employed, including gravity, inertial force (e.g. centrifugal or linear), rams (including air rams), pushers, shunts, conveyors, shuttle hoppers, suction or any combination thereof.

Remote roasting permits greater latitude in the election of cartridge materials: any limitations imposed by heat sensitivity of the cartridge may be circumvented by remote roasting configurations. It is therefore particularly suited to applications where compostable/biodegradable materials are to be sued to manufacture the cartridge (see below).

However, it will be appreciated that remote roasting need not necessarily imply complete thermal insulation of the cartridge/cartridge holder from the roasting chamber: in many cases the roasting chamber and cartridge chamber/cartridge holder are in close physical proximity (for example, to facilitate transfer of beans therebetween), so that the coffee cartridge itself may be indirectly heated during roasting by heat from the roasting chamber.

Remote roasting also facilitates fluidized bed roasting (as described above), and in such cases the hot air flow required for fluidizing the beans may also be used to move the beans from the cartridge chamber to the roasting oven and/or from the roasting oven to the cartridge chamber.

Systems according to the invention configured for remote roasting comprise a roasting chamber. This may take the form of a roasting oven (as described above), or may comprise a roasting chamber including an air-permeable member configured to support the coffee beans thereupon; a hot air inlet disposed so as to introduce a stream of hot air into said chamber, through said permeable member, so as to pass through and fluidize said coffee beans; and an air outlet disposed so as to direct said stream of air out of the chamber after it has passed through the beans.

Remote roasting is particularly advantageous when high and/or rapid roasting is required (for example when dark roasts (such as Italian) and/or when transient very high temperatures (up to 300°C or higher) are employed to accelerate roasting.

### Additives

The coffee cartridge of the invention contains unground coffee beans, but in some embodiments the cartridge may also contain additives confined in the cartridge chamber together with the coffee beans. In such embodiments, the cartridge is adapted to serve as an extraction chamber for the additives as well as the coffee beans.

These optional additives may be selected from flavouring agents, preservatives, foaming agents (as described in e.g. WO2013034520), anti-foaming agents (e.g. surfactants), foam stabilizers (e.g. as described in US2010310746), colouring agents and mixtures thereof.

Suitable flavouring agents include those selected from: cocoa, caramel, vanilla, tea, chicory, fruit/berry extracts (e.g. raspberry, cherry, apricot, banana or citrus, such as lemon), herbs (for example mint), spices (for example, chilli and cinnamon, nutmeg), liqueurs (for example brandy and Amaretto), spirits (e.g. rum and brandy), salt, sugar, scorched sugar, honey, nuts (e.g. almond, hazelnut, walnut, peanut, pecan, macadamia and pistachio), coconut and mixtures of the foregoing.

The additives may be in powdered or granular form (for example, having been spray-dried). In some cases (such as fruit/berry extracts, honey and liqueurs) they may be provided as a syrup or as a glaze or coating on the coffee beans and/or the walls of the cartridge chamber.

Particularly preferred according to the invention is a cartridge containing unground coffee beans and cocoa (optionally further comprising one or more of the other additives listed above), said cartridge having walls defining a chamber in which the beans and cocoa are confined, the cartridge being adapted to serve as a grinding chamber for the coffee beans and as an extraction chamber for the coffee beans and additive(s). In such embodiments, the cocoa is preferably in powdered form.

### Cartridge geometry

The coffee cartridges of the invention contain unground coffee beans. Unground coffee beans cannot be effectively extracted, and so the cartridge of the invention must be adapted to serve as both an extraction and grinding chamber for the coffee beans.

The latter requirement may be reflected in the provision of milling means on the chamber-proximal surface of at least one wall, where the milling means is suitable for grinding the coffee beans within the chamber. The milling means may comprise one or more ribs, recesses, channels, teeth, ridges, spikes, blades or protrusions and it will be appreciated that the nature of the milling means will depend on the physical condition of the unground coffee beans contained in the cartridge (and in particular, whether they are: (a) whole or cracked; and (b) unroasted, dried or pre-heated).

Since the cartridge contains unroasted coffee beans, the beans are roasted (or at least pre-heated) prior to grinding.

The requirement that the cartridge of the invention be adapted to serve as both a grinding and extraction chamber for the coffee beans may alternatively or in addition be reflected by the provision of cartridge walls characterized in that part or all of at least one of said walls is moveable relative to the other walls. In such embodiments, said part or all of at least one wall is moveable such that the volume of the chamber may be reduced. This permits a crushing force to be applied to the beans in the chamber, which may result in effective grinding of the beans (especially in cases where the beans are roasted, as explained above).

However, grinding is typically more effective if a crushing force is coupled with rotational grinding. Thus, in some embodiments, said part or all of at least one wall is rotatable relative to the chamber (and so to the beans contained therein). In such embodiments, a milling means (as described above) is advantageously provided to the chamber-proximal surface of the rotatable wall.

In the latter embodiments, the moveable wall may be substantially planar and/or rigid, so facilitating the transfer of a crushing and or rotational grinding force to the beans in the chamber.

In embodiments where rotational grinding is employed, the geometry of the chamber may advantageously be adapted to facilitate the rotation of part or all of a chamber wall. For example, the cartridge may be cylindrical, substantially cylindrical or frustoconical, having top and bottom walls defining the ends of the cylinder or bases of the frustum, the top and/or bottom walls being: (a) moveable and/or rotatable; and/or (b) provided with milling means as described above.

The internal volume of the cartridge chamber is a function of the amount of coffee present and of the volume of water to be introduced into the chamber for extraction. The volume of water will vary according to the style of coffee to be brewed (e.g. long or short), but is typically 0.5 to 3 times the volume of the coffee.

In embodiments where remote roasting is employed, the cartridge of the invention is configured such that the beans can be removed from the cartridge chamber, and then returned after roasting. This requirement may be reflected in the provision of one or more openable walls (or portions thereof).

### Cartridge materials

As explained above, the cartridge of the invention is adapted to serve as both a grinding and extraction chamber for the coffee beans. The latter requirement may be reflected in the materials used, since extraction may require the injection of pressurized hot water into the cartridge chamber.

Thus, the cartridge is preferably constructed from materials that are heat resistant to at least 80 °C, and preferably to at least 100 °C. Those skilled in the art will be able to select an appropriate material from a wide variety of suitable materials described in, for example, US4895308, US5402707, WO93/17932, US5656316, WO2014/128658, WO2014/091439, US2005/0150391 and EP1554958.

It will be appreciated that any single cartridge may be constructed from a variety of different materials, and may for example employ different materials for the moveable/rotatable walls, slideable plugs, cap or piston element (where provided).

Suitable materials include: metals (such as aluminium, usually having a thickness of between 20µm and 100µm); plastics (such as polypropylene, polyethylene terephthalate (PET) and metallized PET); metal-plastic composites (such as plastic-coated aluminium); cardboard, polymer-coated cardboard and cardboard-metal or cardboard-plastic composites.

Suitable composite/laminate materials include those provided with an oxygen barrier layer (such as ethylene vinyl alcohol, polyvinylidene chloride and/or SiO₂), including barrier-layer coated cardboard/aluminium/plastic or cardboard/plastic laminates.

In certain embodiments, the cartridge cap or plugs are formed of polypropylene (PP), while the walls are formed of polyethylene terephthalate (PET). In such embodiments, the cap is advantageously injection moulded, while the cartridge itself is blow-moulded.

As explained above, the cartridge of the invention comprises unground and unroasted coffee beans. According to some examples that are useful to understand the invention but do not fall within the scope of the invention, (for example where *in situ* roasting is contemplated) the cartridge may be adapted to serve as a grinding, extraction and roasting chamber for the coffee beans.

The latter requirement may be reflected in the materials used for the cartridge, since roasting requires that the beans be heated to at least 196°C (and typically to temperatures approaching 250°C). Suitable materials include paper, cardboard and coated paper or cardboard (for example metal-, polytetrafluoroethylene- (PTFE-) or nitrocellulose-coated paper or cardboard).

The cartridge may advantageously comprise a filter for retaining coffee grounds and other particulates released during extraction within the cartridge chamber. In such embodiments, the filter is preferably located the bottom wall and may comprise a layer of filter paper or woven or non-woven fibres based on PET or PP. Such filters may be bonded or welded to the chamber-proximal surface of the bottom wall of the chamber.

### Biodegradeabiliity

The cartridge according to the invention may be advantageously manufactured from a compostable/biodegradable material. Such materials are described in detail in WO2014/128658, and in particular at pages 4-6 thereof.

Such cartridges preferably meet European standard EN 13432.

### Exemplification

Embodiments of the present invention will now be described by way of example with reference to the accompanying drawings in which:
Figure 1 is a cutaway perspective view of a first example of a coffee cartridge that is useful to understand the invention but does not fall within the scope of the invention.
Figure 2 illustrates schematically a process for roasting, grinding, brewing and dispensing coffee using the coffee cartridge shown in Figure 1 in a coffee making apparatus adapted for use therewith.
Figure 3 illustrates schematically another example of coffee cartridge that does not fall under the scope of the invention but is useful to understand it.
Figure 4A illustrates schematically a process for roasting, grinding, brewing and dispensing coffee using the coffee cartridge shown in Figure 3 in a coffee making apparatus adapted for use therewith.
Figure 4B illustrates schematically an alternative process for roasting, grinding, brewing and dispensing coffee using the coffee cartridge shown in Figure 3 in a coffee making apparatus adapted for use therewith.
Figure 5A is a cutaway perspective view of an embodiment of a coffee cartridge according to the invention.
Figure 5B is a perspective view of the embodiment shown in Figure 5A.
Figure 6A is a cutaway perspective view of a system comprising a coffee cartridge according to the embodiment depicted in figure 5 in association with apparatus according to the invention.
Figure 6B is a perspective view of the brew spike/spout of the system shown in Figure 6A.
Figure 6C is a schematic view of the brew spike/spout when engaged with the cartridge in the system shown in Figure 6B.
Figure 7 illustrates schematically a process for roasting, grinding, brewing and dispensing coffee using the coffee cartridge/system shown in Figures 5 and 6 in a coffee making apparatus adapted for use therewith.
Figure 8 shows plan and section views of a coffee cartridge for use in the system of the invention in closed configuration.
Figure 9 shows top and bottom perspective views of the coffee cartridge shown in Figure 8.
Figure 10 shows plan, sectional and top and bottom perspective views of another embodiment of a coffee cartridge of the invention.
Figure 11 shows plan, sectional and top and bottom perspective views of yet another embodiment of a coffee cartridge of the invention.

### Example 1: In situ roasting

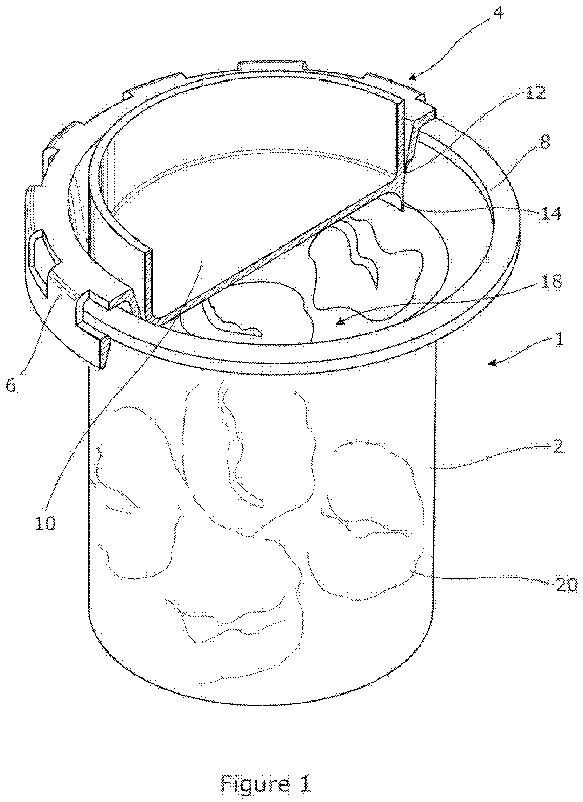

Referring to Figure 1, the coffee cartridge (1) comprises cylindrical side walls (2), a fixed bottom wall (not shown) and a top wall in the form of a cap (4) comprising an outer retainer means (6) for securing the cap to the top of the cartridge by a "snap-on" engagement with a flange on the side walls (8) adapted to engage the outer retainer means (6) of the cap.

The cap (4) has an inner piston element (10) detachably connected to the retainer means by a frangible tear strip (12). The piston element (10) features a peripheral sealing portion (14) adapted to contact the inner surface of the side walls (2) of the cartridge thereby forming a seal, so that the piston element (10) and cartridge chamber may function as a piston and cylinder assembly when the piston element is detached from the retainer means (6) by breakage of the frangible tear strip (12).

Unground (whole) and unroasted (green) coffee beans (20) are shown in ghost.

It will therefore be appreciated that the cartridge walls define a roasting, grinding and brewing chamber (18) in which the coffee beans are confined.

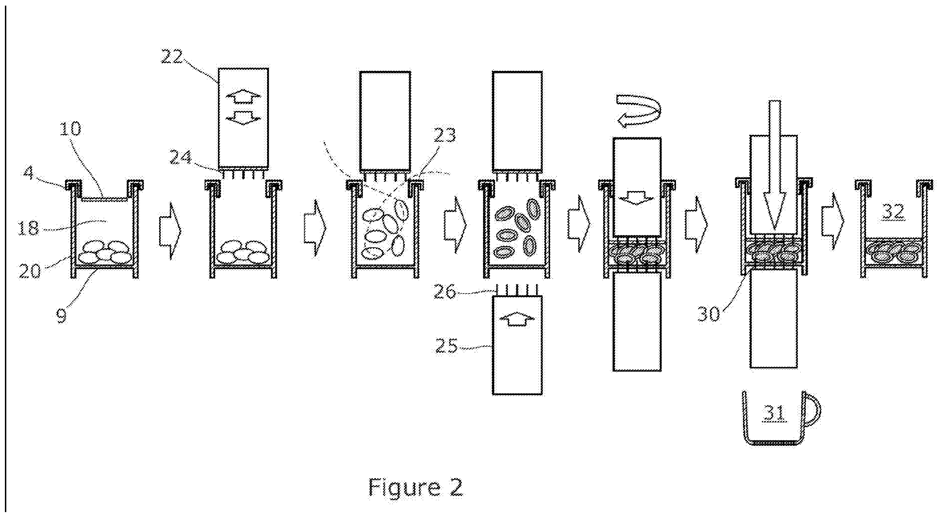

Referring now to Figure 2, and using the numbering for the components of the cartridge adopted in the description of Figure 1 (above), the coffee cartridge (1) is inserted into the cartridge holder (not shown) of the coffee making apparatus. An upper ram (22) having a number of brewing spikes (24) is then lowered onto the inner piston element (10), piercing it with the brewing spikes (24) and coupling therewith (aided by vacuum pressure generated by pump (not shown)).

The frangible tear strip (not shown) is then broken by rotation of the upper ram (22) together with the coupled piston element (10). The upper ram (22) is then lifted so that the coupled piston element (10) is removed from the cap (4), so opening the chamber and creating a peripheral vent (23).

The vent (23) is sufficiently large as to allow the introduction of a flow of hot air (broken arrow) at a volumetric flow rate sufficient to fluidize the beans in the chamber, thereby effecting rapid, *in situ* fluidized bed roasting of the beans within the cartridge chamber.

During this process, the capsule walls are cooled by a cooling element (not shown), while steam and aroma (shown by the arrows) escape *via* the vent (23).

A lower ram (25) having a number of cannulae (26), is then lifted against the fixed bottom wall (9), which is pierced by the cannulae (26) such that they protrude slightly through the bottom wall and come into contact with the coffee beans in the chamber. At the same time, the upper ram (22) together with the coupled piston element (10) is lowered and so reinserted into the chamber to close the chamber. The roasted beans are then rapidly degassed *via* the brewing spikes by the application of a vacuum thereto.

The upper ram (22) is then driven towards the bottom wall, during which process the piston element (10) and brewing spikes (24) are brought into contact with the roasted beans confined therein, thereby crushing the roasted beans. The upper ram is then rotated, exerting a rotational grinding force on the crushed beans *via* the protruding brewing spikes (24) and lower protruding cannulae (26).

This processes described above yields freshly roasted coffee grounds (30) confined within the chamber (18) of the cartridge.

Hot water (93 °C) is then pumped (at a pressure of 5 bar) into the extraction chamber *via* the brewing spikes (24) in the upper ram (22) (shown by the arrow). The water is forced around the coffee grounds (30), extracting the coffee brew as it flows towards the cannulae (26) in the lower ram. The brewed coffee then flows out of the cannulae into a coffee cup (31) *via* a brew spout (not shown).

The upper ram (22) and lower ram (25) are then detached from the cartridge and the spent cartridge containing wet, compressed coffee grounds (32) is then ejected from the cartridge holder into a waste compartment (not shown).

### Example 2: Remote oven roasting

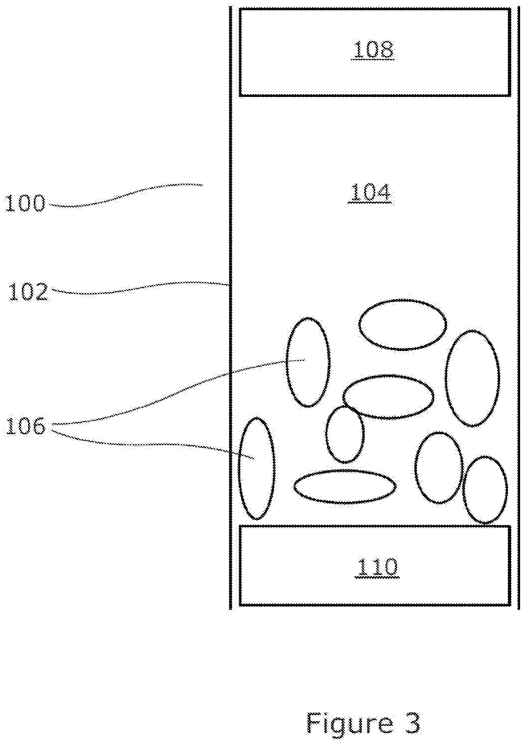

Referring now to Figure 3, the coffee cartridge (100) takes the form of a cylinder with cylindrical side walls (102) and top and bottom walls defining a chamber (104) containing unground (whole) and unroasted (green) coffee beans (106). The top and bottom walls are each in the form of upper and lower plugs slidably fitted within the chamber (108 and 110, respectively).

### Shuttle hopper transfer

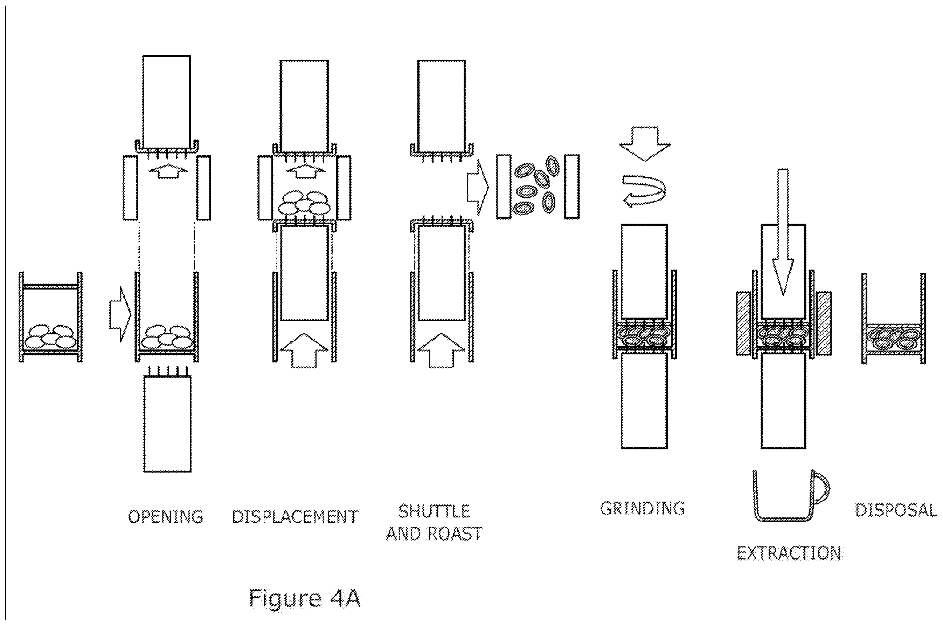

Referring now to Figure 4A, and for clarity omitting all reference numerals (since the components will be recognized from the description given above for Figure 2), the coffee cartridge is inserted into the cartridge holder of the coffee making apparatus. The cartridge is then opened by removal of the upper plug with an upper ram having a number of brewing spikes which pierce the upper plug (thereby coupling upper ram and upper plug).

A lower ram having a number of cannulae is driven against the lower plug, which is pierced by the cannulae such that they protrude slightly through the lower plug and come into contact with the coffee beans in the chamber. The lower ram slides the lower plug past the upper end of the side walls of the chamber so displacing the beans into a shuttle hopper.

The shuttle hopper containing the beans is then moved away from the top and lower plugs and the walls of the hopper are then heated to roast the beans, while steam and aroma escape *via* a vent (not shown).

After cooling, the hopper is returned to its original location such that the roasted beans are again located between the upper plug and lower plugs. The upper ram is then driven towards the lower plug, during which process the roasted beans are crushed and brought into contact with the protruding brewing spikes and lower protruding cannulae. At the same time the upper and lower plugs, with the roasted beans between them, are pushed through the hopper, past the upper end of the side walls of the cartridge and back into the chamber, so that the roasted beans are returned to the cartridge chamber.

The upper ram then drives, in turn, the top plug (108) against the roasted beans (106), and the roasted beans against the lower plug (110), thereby crushing the roasted beans, while rotation thereof exerts a rotational grinding force on the crushed beans *via* the protruding brewing spikes and lower protruding cannulae.

This process yields fresh roasted coffee grounds confined within the chamber of the cartridge.

Hot water (93 °C) is then pumped (at a pressure of 5 bar) into the extraction chamber *via* the brewing spikes in the upper ram (shown by the arrow). The water is forced around the coffee grounds, extracting the coffee brew as it flows towards the cannulae in the lower ram. The brewed coffee then flows out of the cannulae into a coffee cup *via* a brew spout (not shown).

The upper ram and lower ram are then detached from the cartridge and the spent cartridge containing wet, compressed coffee grounds is then ejected from the cartridge holder into a waste compartment (not shown).

### Gravity transfer by inversion

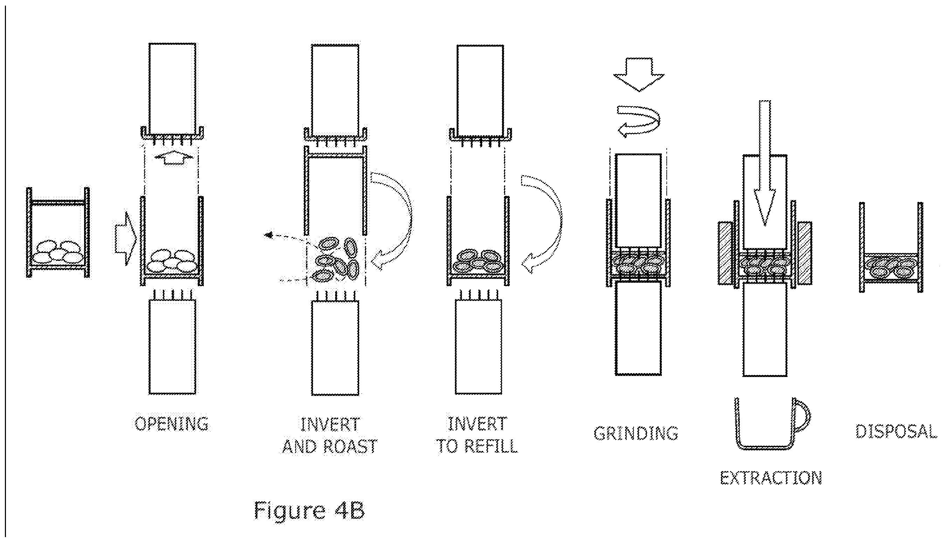

As an alternative to the process described above in relation to Figure 4A, the beans may also be transferred from the cartridge chamber to a remote roasting oven by a gravity driven process shown schematically in Figure 4B. Again, for clarity all reference numerals have been omitted (since the elements will be recognized from the description given above for Figure 2).

Here, the coffee cartridge is inserted into the cartridge holder (not shown) of the coffee making apparatus. The cartridge holder has an upper oven portion. An upper ram having a number of brewing spikes removes the upper plug and the cartridge holder and oven are then inverted, causing the beans to fall by gravity out of the cartridge chamber and into the oven portion, where they are roasted.

After roasting, the cartridge holder and oven are returned to their original position, causing the roasted beans to fall back into the cartridge chamber.

The upper ram, coupled to the upper plug, is then driven towards the lower plug, thereby crushing the roasted beans, while rotation thereof exerts a rotational grinding force on the crushed beans *via* the protruding brewing spikes of the upper ram and the protruding cannulae of the lower ram.

This process yields fresh roasted coffee grounds confined within the chamber of the cartridge.

Hot water (93 °C) is then pumped (at a pressure of 5 bar) into the extraction chamber *via* the brewing spikes in the upper ram (shown by the arrow). The water is forced around the coffee grounds, extracting the coffee brew as it flows towards the cannulae in the lower ram. The brewed coffee then flows out of the cannulae into a coffee cup *via* a brew spout (not shown).

The upper ram and lower ram are then detached from the cartridge and the spent cartridge containing wet, compressed coffee grounds is then ejected from the cartridge holder into a waste compartment (not shown).

### Example 3: Remote fluidized bed roasting

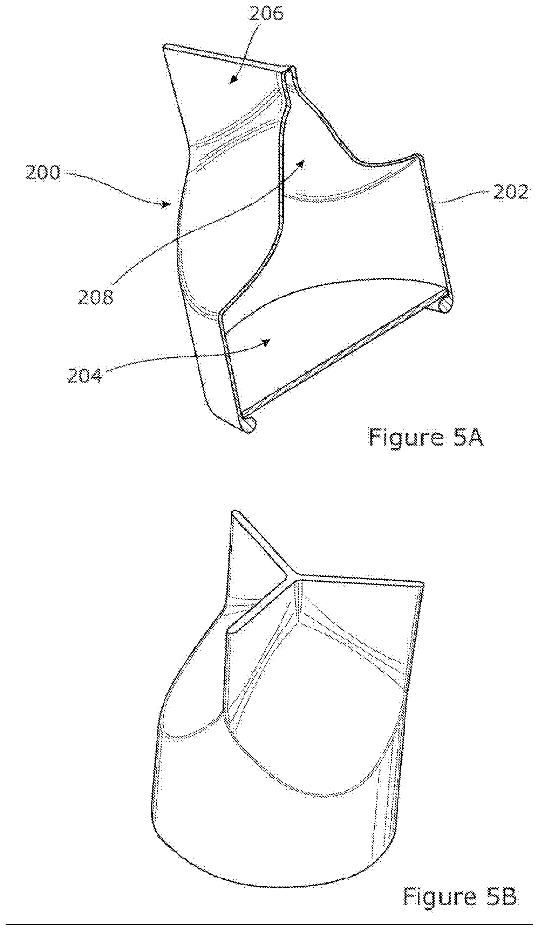

Referring now to Figure 5A, the coffee cartridge (200) takes the form of a cylinder with cylindrical side walls (202), a bottom wall (204) slidable against the side walls (202) and a 3-pointed crimped and welded top wall (206) defining a chamber (208) containing unground (whole) and unroasted (green) coffee beans (not shown). The cartridge is formed of cardboard having an aluminium coating on the inner walls.

The 3-pointed crimped top wall (206) is shown more clearly in Figure 5B.

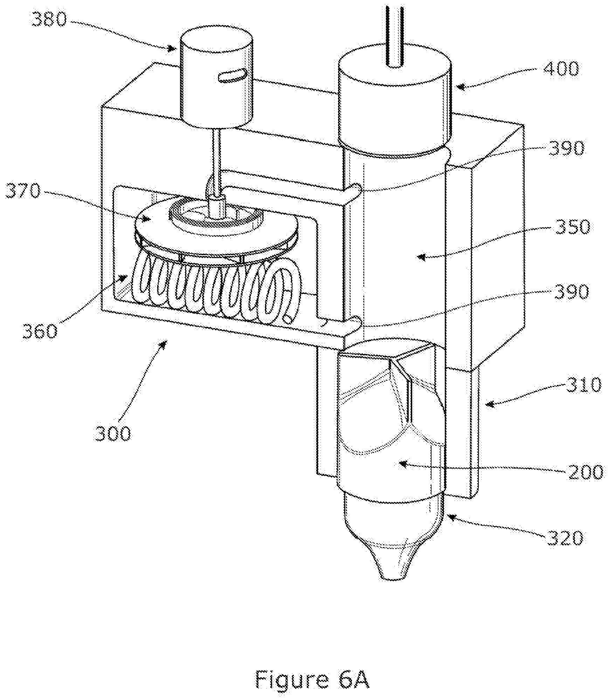

Referring now to Figure 6A, the cartridge (200) is shown in conjunction with a coffee making apparatus (300) for roasting, grinding, brewing and dispensing coffee for use with the cartridge (200), the cartridge (200) shown located in a cartridge holder (310) which is water-tight and adapted to serve as a pressure jacket to contain the pressurized hot water during injection into the chamber of the cartridge and through the coffee grounds. The bottom wall of the cartridge (not shown) is engaged with a brewing spike integrated with a brew spout (320).

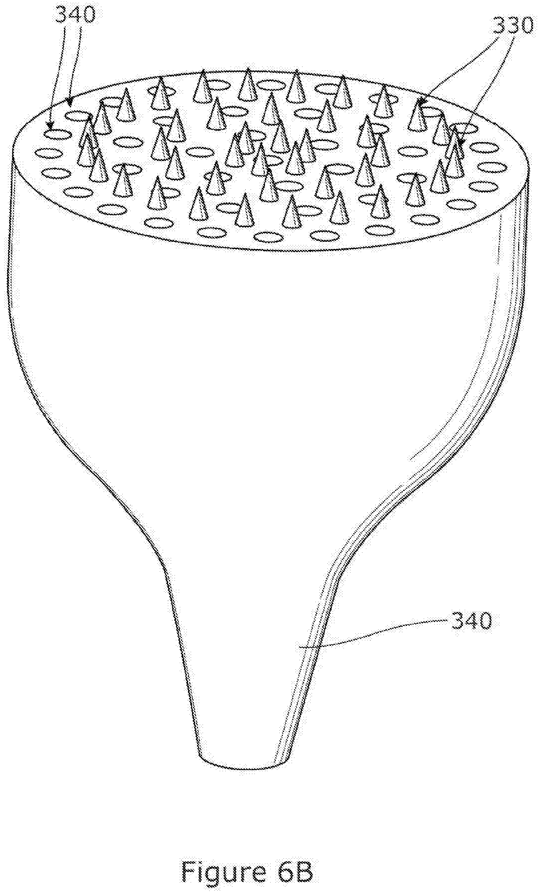

The integrated brew spike/spout (320) is shown more clearly in Figure 6B. The brew spike/spout (320) comprises a number of spikes (330) and a number of channels (340) for conducting brewed coffee out of the chamber *via* the perforations introduced by the spikes (330) into the bottom wall (204) of the cartridge. The brewing spike is integrated with a brew spout (340) for dispensing the brewed coffee.

Above the cartridge holder (310) is a roasting chamber (350) into which air heated by heating element (360) is circulated by fan (370) driven by motor (380) *via* ducts (390).

Grinding plunger (400) is adapted to descend and rotate, to grind the roasted beans. It comprises feed means (not shown) for introducing pressurized hot water into the chamber of the cartridge (200) and is in fluid communication with a source of pressurized hot water (not shown).

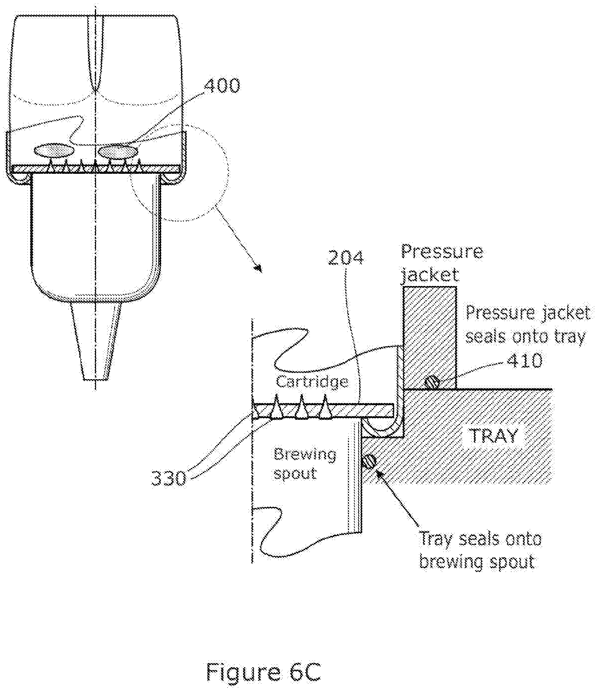

The engagement of the bottom wall (204) of the cartridge with the brew spike/spout (320) and the cartridge holder (310) is shown more clearly in Figure 6C. This shows the spikes (330) perforating the bottom wall (204) of the cartridge such that they can contact the coffee beans (400) in the chamber. The expanded area shows sealing means (410) between brew spike/spout (320) and cartridge holder (310).

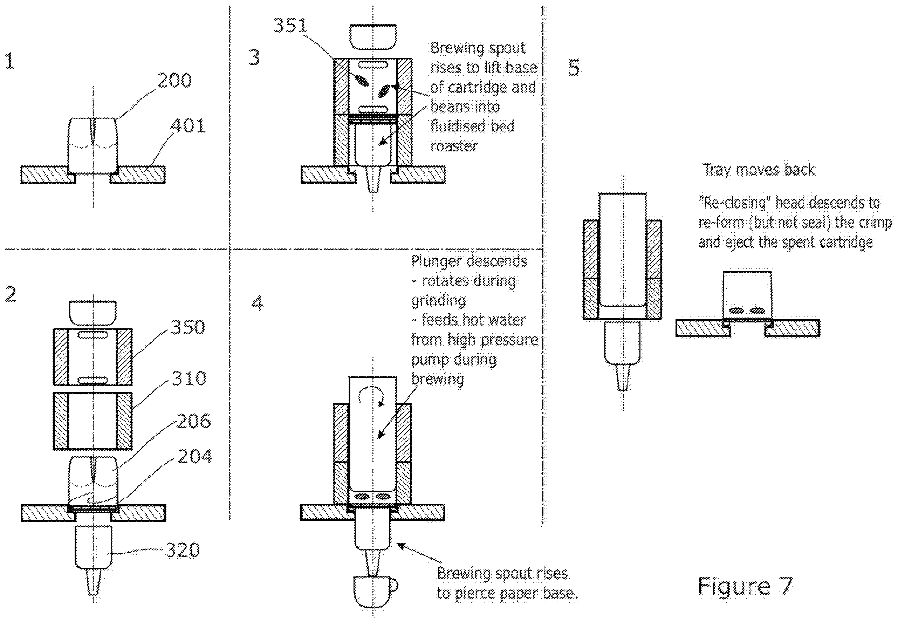

Referring now to Figure 7, the cartridge (200) is loaded into a cartridge tray (401) by the user, and the tray then moved into position beneath cartridge holder (310) and roasting chamber (350). The brewing spike/spout (320) then rises to slide the bottom wall (204) towards the roasting chamber, driving the beans (not shown) against the welded top (206), thereby breaking the welds, opening the top (206) and moving the beans (351) into the roasting chamber (350).

Hot air at about 300 °C is then circulated through the roasting chamber by fan (370), fluidizing the beans and rapidly roasting them.

After roasting, the beans (351) are driven back into the chamber by grinding plunger (391), which compresses the roasted beans against the brewing spike/spout (320), pushing the beans together with the brewing spike/spout (320) back into contact with the tray (401). The grinding plunger is then rotated to grind the roasted beans.

This process yields fresh roasted coffee grounds confined within the chamber of the cartridge.

Hot water is then fed through the grinding plunger (391) from a high pressure pump (not shown), forcing the hot water through the ground beans and extracting a coffee brew which is delivered to the user *via* the brew spike/spout (320). The machine then automatically cleans the grinding plunger while a reclosing plunger (not shown) reforms (but does not re-weld) the crimp of the top wall (206), so that the spent grounds and cartridge can be ejected into a waste compartment (not shown) without user intervention.

### Example 4: Remote fluidized bed roasting with a cartridge having a folded closure

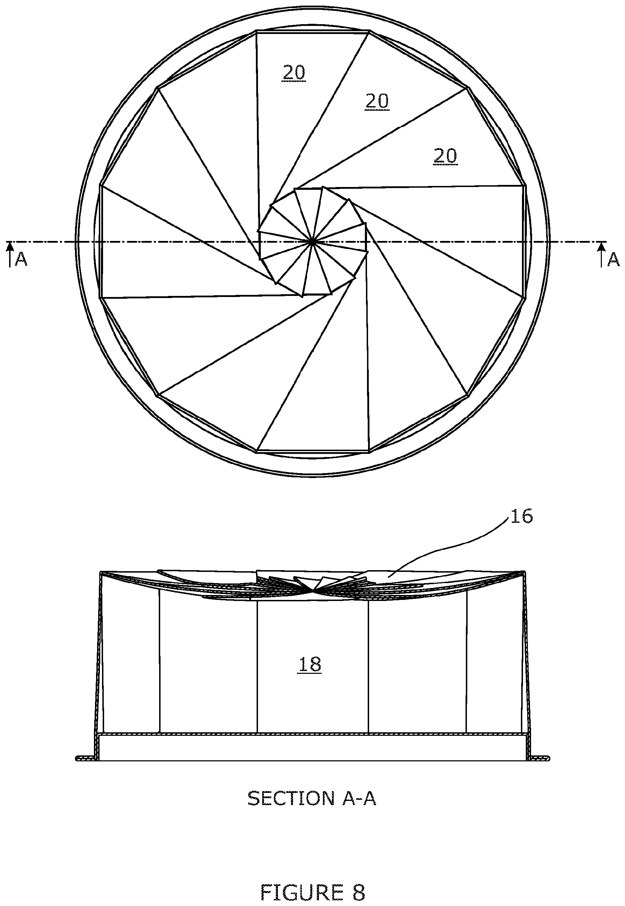

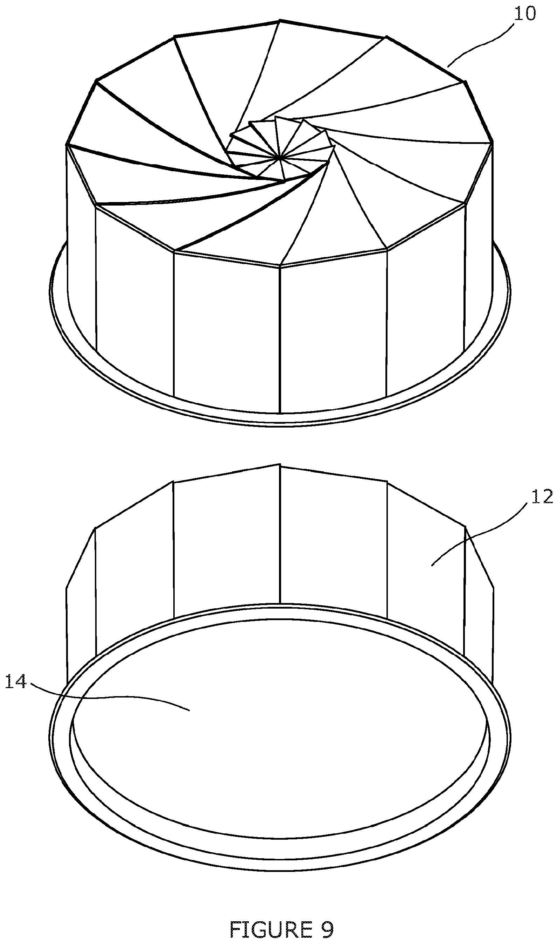

Referring now to Figures 8 and 9, the coffee cartridge (10) is substantially cylindrical with substantially cylindrical side walls (12), a bottom wall (14) slidable against the side walls (12) and a reversibly openable top wall (16). The walls define a chamber (18) containing unground (whole) and unroasted (green) coffee beans (not shown). The cartridge is formed of cardboard.

The reversibly openable top wall (16) is formed by a number of sequentially overlapping hinged flaps (20).

This cartridge may be used in a remote fluidized bed roasting system in an analogous fashion to that described for the crimped and welded cartridge as described in Example 3.

It should be noted that the hinged flaps need not be refolded into a sequentially overlapping configuration after extraction: all that is required is that the spent coffee grounds be substantially retained by the refolded flaps within the cartridge chamber prior to ejection into the waste compartment.

### Example 5: Remote fluidized bed roasting with a cartridge having a single flap closure

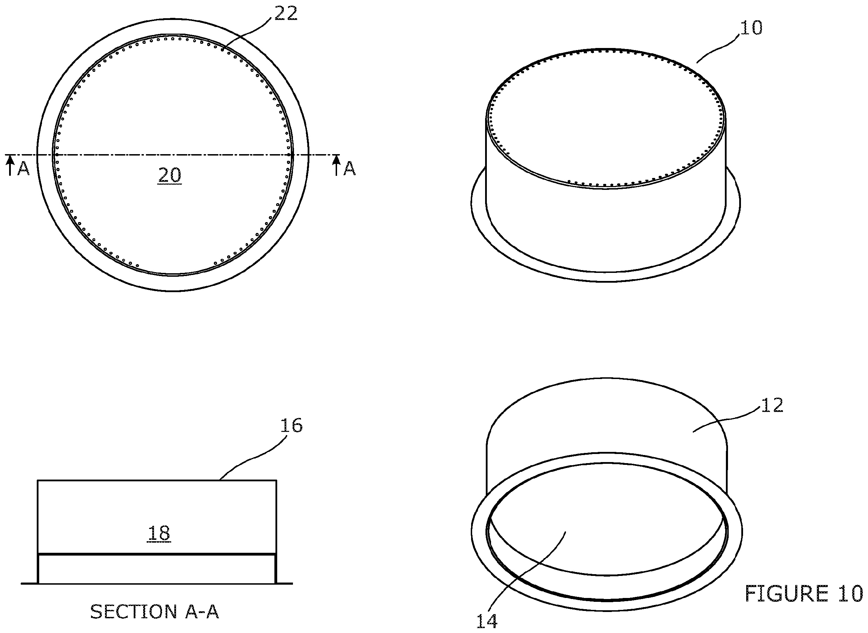

Referring now to Figure 10, the coffee cartridge (10) is substantially cylindrical with substantially cylindrical side walls (12), a bottom wall (14) slidable against the side walls (12) and a reversibly openable top wall (16). The walls define a chamber (18) containing unground (whole) and unroasted (green) coffee beans (not shown). Part-roasted beans may also be used. The cartridge is formed of cardboard.

The reversibly openable top wall (16) is formed by a hinged flap (20), releasably connected to said cartridge wall by a perforated tear-line (22).

This cartridge may be used in a remote fluidized bed roasting system in an analogous fashion to that described for the crimped and welded cartridge as described in Example 3.

It should be noted that the hinged flaps need not be precisely refolded after extraction: all that is required is that the spent coffee grounds be substantially retained by the refolded flaps within the cartridge chamber prior to ejection into the waste compartment.

### Example 6: Remote fluidized bed roasting with a cartridge having a two-leaf door closure

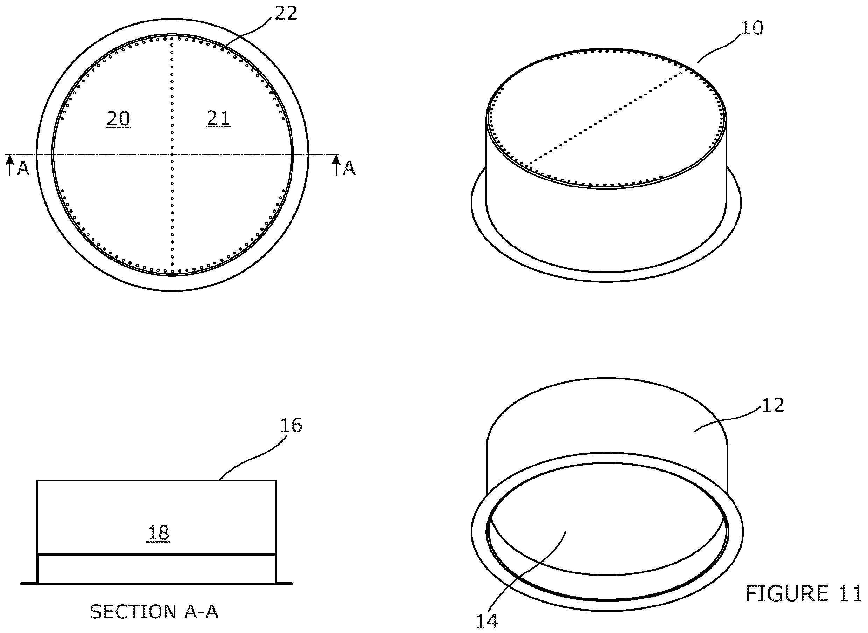

Referring now to Figure 11, the coffee cartridge (10) is substantially cylindrical with substantially cylindrical side walls (12), a bottom wall (14) slidable against the side walls (12) and a reversibly openable top wall (16). The walls define a chamber (18) containing unground (whole) and unroasted (green) coffee beans (not shown). The cartridge is formed of cardboard.

The reversibly openable top wall (16) is a folded closure is in the form of two opposed hinged flaps (20 and 21) configured as a two-leaf door, each door releasably connected to said cartridge wall by perforated tear-lines (22 and 23).

This cartridge may be used in a remote fluidized bed roasting system in an analogous fashion to that described for the crimped and welded cartridge as described in Example 3.

It should again be noted that the hinged flaps need not be precisely refolded after extraction: all that is required is that the spent coffee grounds be substantially retained by the refolded flaps within the cartridge chamber prior to ejection into the waste compartment.

The foregoing description details presently preferred embodiments of the present invention which are therefore to be considered in all respects as illustrative and not restrictive. Those skilled in the art will recognize, or be able to ascertain, using no more than routine experimentation, many equivalents, modifications and variations to the specific embodiments of the invention encompassed in the scope of the appended claims.

## Claims

1. A coffee cartridge (10) containing unground and unroasted coffee beans, said cartridge having walls defining a chamber (18) in which the beans are confined, wherein: (a) part or all of at least one wall (16) is reversibly openable such that a plunger (400) may be introduced into the cartridge chamber to apply a crushing force to the beans confined in the chamber, and (b) the reversibly openable wall is opposed to a slidable wall (14), wherein the reversibly openable wall or part thereof comprises a folded closure comprising a flap (20) and the slidable wall (14) is adapted to slide towards the openable wall (16) such that the beans can be displaced from the chamber when said reversibly openable wall (16) is open.

2. The cartridge of claim 1 wherein said flap is adapted to fold at a hinge portion.

3. The cartridge of any one of the preceding claims wherein said hinge portion comprises a fold in a cartridge wall.

4. The cartridge of any one of the preceding claims wherein the folded closure comprises:
(a) at least three flaps; or
(b) at least four flaps; or
(c) at least five flaps; or
(d) at least six flaps; or
(e) at least seven flaps; or
(f) at least eight flaps; or
(g) at least nine flaps; or
(h) at least ten flaps; or
(i) at least eleven flaps; or
(j) at least twelve flaps; or
(k) more than twelve flaps.

5. The cartridge of claim 4 wherein the flaps are sequentially overlapping when folded into a closed configuration.

6. The cartridge of any one of the preceding claims, wherein the unground and unroasted coffee beans are selected from: (i) green coffee beans; (ii) dried coffee beans; (iii) pre-heated coffee beans; and (iv) mixtures of two or more of the foregoing.

7. The cartridge of any one of the preceding claims, which is a disposable, single-serve cartridge.

8. The cartridge of any one of the preceding claims wherein one or more additives selected from flavouring agents, preservatives, foaming agents, anti-foaming agents, foam stabilizers, colouring agents and mixtures thereof are confined in the chamber of the cartridge together with the coffee beans.

9. The cartridge of any one of the preceding claims, wherein at least one component of the cartridge is: (a) biodegradeable; (b) non-biodegradeable; (c) compostable; (d) non-compostable; (e) recyclable and/or (f) non-recyclable.

10. A process for producing and dispensing brewed coffee from a coffee cartridge as defined in any one of the preceding claims, said process comprising the step of displacing the unroasted and unground coffee beans from the chamber by sliding the slidable wall, roasting the unroasted and unground coffee beans, return the roasted and unground coffee beans into the chamber, grinding, and extracting the coffee beans.

## Patentansprüche

1. Kaffeekapsel (10), die ungemahlene und ungeröstete Kaffeebohnen enthält, wobei die Kapsel Wände aufweist, die eine Kammer (18) definieren, in der die Bohnen eingeschlossen sind, wobei: (a) ein Teil oder eine gesamte von wenigstens einer Wand (16) derart reversibel öffenbar ist, dass ein Kolben (400) in die Kapselkammer eingeführt werden kann, um eine Quetschkraft auf die in der Kammer eingeschlossenen Bohnen auszuüben, und (b) die reversibel öffenbare Wand einer verschiebbaren Wand (14) gegenüber liegt, wobei die reversibel öffenbare Wand oder ein Teil davon einen gefalteten Verschluss umfasst, der eine Klappe (20) umfasst, und die verschiebbare Wand (14) angepasst ist, um sich in Richtung der öffenbaren Wand (16) derart zu verschieben, dass die Bohnen aus der Kammer verdrängt werden können, wenn die reversibel öffenbare Wand (16) offen ist.

2. Kapsel nach Anspruch 1, wobei die Klappe angepasst ist, um an einem Scharnierabschnitt zu falten.

3. Kapsel nach einem der vorhergehenden Ansprüche, wobei der Scharnierabschnitt eine Falte in einer Kapselwand umfasst.

4. Kapsel nach einem der vorhergehenden Ansprüche, wobei der gefaltete Verschluss Folgendes umfasst:
(a) wenigstens drei Klappen; oder
(b) wenigstens vier Klappen; oder
(c) wenigstens fünf Klappen; oder
(d) wenigstens sechs Klappen; oder
(e) wenigstens sieben Klappen; oder
(f) wenigstens acht Klappen; oder
(g) wenigstens neun Klappen; oder
(h) wenigstens zehn Klappen; oder
(i) wenigstens elf Klappen; oder
(j) wenigstens zwölf Klappen; oder
(k) mehr als zwölf Klappen.

5. Kapsel nach Anspruch 4, wobei sich die Klappen nacheinander überlappen, wenn sie in eine geschlossene Konfiguration gefaltet werden.

6. Kapsel nach einem der vorhergehenden Ansprüche, wobei die ungemahlenen und ungerösteten Kaffeebohnen aus Folgendem ausgewählt sind: (i) grünen Kaffeebohnen; (ii) getrockneten Kaffeebohnen; (iii) vorerhitzten Kaffeebohnen; und (iv) Gemischen von zwei oder mehreren der vorstehenden.

7. Kapsel nach einem der vorhergehenden Ansprüche, die eine Einzelportionskapsel ist.

8. Kapsel nach einem der vorhergehenden Ansprüche, wobei ein oder mehrere Additive, die aus Aromastoffen, Konservierungsstoffen, Verschäumungsmitteln, Antiverschäumungsmitteln, Schaumstabilisatoren, Farbstoffen und Gemischen davon ausgewählt sind, zusammen mit den Kaffeebohnen in der Kammer der Kapsel eingeschlossen sind.

9. Kapsel nach einem der vorhergehenden Ansprüche, wobei wenigstens eine Komponente der Kapsel Folgendes ist: (a) biologisch abbaubar; (b) nicht biologisch abbaubar; (c) kompostierbar; (d) nicht kompostierbar; (e) wiederverwertbar und/oder (f) nicht wiederverwertbar.

10. Vorgang zum Herstellen und Abgeben von gebrühtem Kaffee aus einer Kaffeekapsel nach einem der vorhergehenden Ansprüche, wobei der Vorgang den Schritt eines Verdrängens der ungerösteten und ungemahlenen Kaffeebohnen aus der Kammer durch Schieben der verschiebbaren Wand, Rösten der ungerösteten und ungemahlenen Kaffeebohnen, Rückführen der gerösteten und ungemahlenen Kaffeebohnen in die Kammer, Mahlen, und Extrahieren der Kaffeebohnen umfasst.

## Revendications

1. Cartouche pour café (10) contenant des grains de café non moulus et non torréfiés, ladite cartouche ayant des parois définissant une chambre (18) dans laquelle les grains sont confinés, dans laquelle : (a) une partie ou la totalité d'au moins une paroi (16) peut être ouverte de manière réversible de sorte qu'un piston (400) peut être introduit dans la chambre de la cartouche pour exercer une force d'écrasement sur les grains confinés dans la chambre, et (b) la paroi pouvant être ouverte de manière réversible est opposée à une paroi coulissante (14), dans laquelle la paroi pouvant être ouverte de manière réversible ou une partie de celle-ci comprend une fermeture à repli comprenant un rabat (20) et la paroi coulissante (14) est adaptée pour coulisser vers la paroi pouvant être ouverte (16) de telle sorte que les grains peuvent être déplacés de la chambre lorsque ladite paroi pouvant être ouverte de manière réversible (16) est ouverte.

2. Cartouche selon la revendication 1, dans laquelle ledit rabat est adapté pour se plier au niveau d'une partie charnière.

3. Cartouche selon l'une quelconque des revendications précédentes, dans laquelle ladite partie charnière comprend un pli dans une paroi de cartouche.

4. Cartouche selon l'une quelconque des revendications précédentes, dans laquelle la fermeture à repli comprend :
(a) au moins trois rabats ; ou
(b) au moins quatre rabats ; ou
(c) au moins cinq rabats ; ou
(d) au moins six rabats ; ou
(e) au moins sept rabats ; ou
(f) au moins huit rabats ; ou
(g) au moins neuf rabats ; ou
(h) au moins dix rabats ; ou
(i) au moins onze rabats ; ou
(j) au moins douze rabats ; ou
(k) plus de douze rabats.

5. Cartouche selon la revendication 4, dans laquelle les rabats se chevauchent de manière séquentielle lorsqu'ils sont rabattus en une configuration fermée.

6. Cartouche selon l'une quelconque des revendications précédentes, dans laquelle les grains de café non moulus et non torréfiés sont choisis parmi : (i) des grains de café vert ; (ii) des grains de café séchés ; (iii) des grains de café préchauffés ; et (iv) des mélanges de deux ou plus des précédents.

7. Cartouche selon l'une quelconque des revendications précédentes, qui est une cartouche jetable à usage unique.

8. Cartouche selon l'une quelconque des revendications précédentes, dans laquelle un ou plusieurs additifs choisis parmi les agents aromatisants, les conservateurs, les agents moussants, les agents anti-moussants, les stabilisants de mousse, les agents colorants et leurs mélanges sont confinés dans la chambre de la cartouche avec les grains de café.

9. Cartouche selon l'une quelconque des revendications précédentes, dans laquelle au moins un composant de la cartouche est : (a) biodégradable ; (b) non biodégradable ; (c) compostable ; (d) non compostable ; (e) recyclable et/ou (f) non recyclable.

10. Procédé de production et de distribution de café infusé à partir d'une cartouche pour café telle que définie dans l'une quelconque des revendications précédentes, ledit procédé comprenant l'étape consistant à déplacer les grains de café non torréfiés et non moulus de la chambre en faisant glisser la paroi coulissante, à torréfier les grains de café non torréfiés et non moulus, à remettre les grains de café torréfiés et non moulus dans la chambre, à moudre et à extraire les grains de café.
